# EUROPEAN PATENT APPLICATION

(11) **EP 3 680 081 A1**
(43) Date of publication of application: **15.07.2020**
(21) Application number: 20151311.6
(22) Date of filing: 10.01.2020
(51) Int. Cl.: B29B 15/12, B29B 15/14

(54) **DEVICE AND METHOD FOR IMPREGNATING A FILAMENT**

(30) Priority: 10.01.2019 PT 2019115255
(71) Applicant: Inegi - Instituto de Ciência e Inovação em Engenharia Mecânica e Engenharia Industrial, 4200-465 Porto (PT)
(72) Inventor: CARDOSO QUEIRÓS, Pedro Miguel, 4635-451 Tabuado (PT); FRANCISCO DE ORNELAS Godinho, 3720-252 Oliveira de Azeméis (PT); TORRES MARQUES, António, 4200-272 Porto (PT); QUEIRÓS DE FARIA, Hugo, 4000-392 Porto (PT)
(74) Representative: Patentree

(57) **Abstract**

Device and method for impregnating a filament, comprising: a sponge for applying an impregnation material over the filament; a sponger compartment for guiding the sponge; a pressure means arranged to push the sponge inside the sponger compartment; a rotatable drum for supporting and tensioning the filament and receive the impregnation material; a vertical support for supporting the previous element; wherein the lateral of the drum is in contact with the sponge. The impregnated fibre of the present disclosure may be use in different substrates, namely reinforce-composite material. Such materials have broad proven applications especially in the automotive, aircraft and aerospace sectors.

## Description

### TECHNICAL FIELD

The present disclosure relates to resin impregnation using a sponge. A purpose of this disclosure is the efficiency of the impregnation and the savings of the resin.

### BACKGROUND

The traditional bath-based impregnation method, which has been the predominant wet filament winding and pultrusion techniques used for thermosetting resins by the composites industry over the last 50 years, has until now remained largely unchanged.

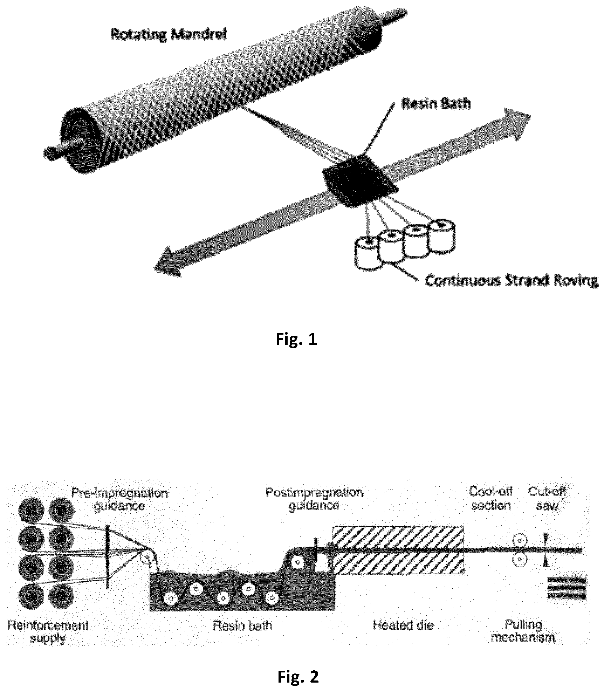

Filament winding is one of the most widely used processing routines for continuous fibre reinforced polymer components with thermosetting resins. Fibre tows pass through a resin bath before winding onto a mandrel. There is a variety of orientations controlled by the fibre feeding mechanism and the rate of rotation of the mandrel, Figure 1. The number of axes used has grown over the past years. At the beginning, two axes (mandrel rotation and winding head) were sufficient for a winding process.

The rather simple technology and fast winding speeds allow for a high degree of productivity. The focus lies on the fabrication of axially symmetrical components, such as pressure vessels, tanks and piping.

Wet pultrusion, Figure 2, is the most common process to produce composite profiles. The fibre tows pass through a resin bath before and are guided into a heated die to be cured at the required temperature. Then, they are consolidated to the required size in its first zone and, after cooled down in order to solidify. The pultruded material is then cut into specified lengths.

The fibres are impregnated with a liquid resin, such as unsaturated polyester or an epoxy resin, via an impregnation bath or a roll applicator, Figure 1 or 2. The fibres are wetted before they are wound onto the mandrel or before they enter in the die. To obtain wetting, the fibres are typically drawn through an impregnation bath or passed over an applicator roll. Wetting and fill impregnation are difficult to achieve with these traditional methods. Further, these methods often result in air being trapped in the wetted reinforcement bundle. Even at slow speeds, these conventional wetting processes are only capable of wetting, impregnation and air removal of a limited number of strands.

Hence, the rate of reinforcement material application that may be incorporated within filament wound parts or pultruded profiles is relatively limited. Further, filament wound parts or pultruded profiles are made at relatively low production rates due to the slow rate of wetting, making such parts expensive.

Resin baths are open or partially open to the atmosphere resulting in significant emissions into the atmosphere of environmentally unfriendly volatile organic compounds or VOC's. Further, significant resin waste commonly occurs with the use of open bath wet-out methods. Voids are commonly found in filament wound parts and pultruded profiles that are caused by air becoming entrapped in the resin loaded onto the fibres as they pass through a resin bath or engage a roll applicator.

Increasing the impregnation temperature comes along with a rise in the mechanical properties and a corresponding reduction in void content. This is because higher temperatures result in a lower viscosity, which in turn, favours the impregnation. In addition, the incoming tow has a higher temperature at the nip-point, which is good for the final consolidation process of the wound tubes and pultruded profiles. However, the required pulling force increases with the melt temperature.

From an economical point of view, the processing speed is a very important factor for all production routines. In the present case, the mechanical properties remained almost unchanged up to a processing speed of 15 m/min. Generally, increasing the speed reduces the time available for both fibre bundle impregnation and part consolidation, while there is a linear rise in the required force to pull the fibre bundle off the impregnation device. The degree of impregnation is still acceptable up to a speed of 15 m/min. However, above this value breakage of single filaments could be observed, which was attributed to the excessive pulling forces.

Document KR20110083315A discloses a filament winding device wherein a reinforcing fibre supply member is supplied fibre through a plurality of bobbins; a resin impregnation member comprising a resin impregnation tank containing a liquid resin to impregnate the reinforcing fibres; a mandrel to which reinforcing fibres impregnated in the liquid resin are wound; and a resin removing member positioned between the resin impregnating tank and the mandrel, the one side facing the mandrel having a resin removing unit configured to selectively adhere to the mandrel. The filament winding device has the effect of maintaining a uniform distribution of the resin impregnation of the reinforcing fibres wound on the mandrel to produce a molding having a uniform physical properties and strength at any position.

These facts are disclosed in order to illustrate the technical problem addressed by the present disclosure.

### GENERAL DESCRIPTION

Fibre impregnation in a filament winding and pultrusion is always an issue, despite much work has been done related with it. The purpose of this disclosure is to develop an innovative experimental set up adapted to a filament winding or pultrusion resin impregnation system.

This new wet-filament winding technology and wet-pultrusion process offer a clean and efficient method of production for high-performance composites.

Unique design components in this new wet-filament winding and wet-pultrusion technology include a custom-built modular fibre bundle spreading station and a mixed resin fibre impregnation unit, which together provide effective fibre wetting. Waste and solvent usage is also significantly reduced compared with traditional wet bath filament winding production and wet-pultrusion; up to 80% less cleaning solvent consumption has been achieved, along with an equivalent reduction of mixed resin waste. A variety of thermosets, including faster curing resins, have been successfully trialled with this new clean filament winding technology, which can be retrofitted and adapted for other manufacturing processes, such as prepreg and pultrusion.

This new, environmentally friendly, clean production technology, with improved productivity and significantly less waste, offers a next generation alternative technology for manufacturers, which can be retrofitted to existing filament winding and wet-pultrusion machines.

With this new "clean" wet-filament winding and wet-pultrusion process, the conventional wet resin bath is replaced by the modular mixed resin fibre impregnation unit, typically mounted on the traverse-arm of the filament winding machine, close to the mandrel or in a new designed support before the post impregnation guidance.

In an embodiment, the thermoset resin and hardener/initiator/catalyst are contained in separate reservoirs, metered electronically and delivered on-demand by two precision gear-pumps via a custom-made manifold into the static mixer, which is connected to the mixed resin fibre impregnation unit. The system is able to apply a very precise volume of mixed resin to impregnate the fibre bundle, so minimising over-impregnation; the precision pumps fitted in the fully operational prototype are capable of delivering 10-110 g.min-1 of resin and hardener and handling liquids with viscosities of 20-10,000 mPa.s.

In an embodiment, a feedback control system between the rotating mandrel and the resin-dispensing unit (or between the die and the resin-dispensing unit) is used to control the relative throughput of the resin and hardener.

In an embodiment, the final product may have the following advantages in comparison with other methods of impregnation:
Impregnation homogeneity throughout the process;
Adjusts the impregnation to bandwidth, fibre type;
Keeps the tension system independent of the bath allowing a better homogeneity of fibre tension.

It is disclosed a device for impregnating a filament, comprising:
a sponge arranged to dispense an impregnation material onto the filament;
a sponge compartment for guiding the sponge towards the filament;
a pressure means arranged to push the sponge inside the sponge compartment and towards the filament;
a cylindrical surface drum for supporting and tensioning the filament to receive the impregnation material;
wherein the drum is arranged to contact with the sponge at a contact area through which the filament passes at an angle that is substantially perpendicular to the cylindrical surface longitudinal axis.

A cylindrical surface can be defined as a surface consisting of all the points on all the lines which are parallel to a given line and which pass through a fixed plane curve in a plane not parallel to the given line; these cylindrical surfaces can be referred to as generalized cylinders. If the plane and the given line are perpendicular, the cylindrical surface can be said to be a right cylindrical surface. A cylindrical surface having a cross section that is an ellipse, parabola, or hyperbola can then be called an elliptic cylinder, parabolic cylinder or hyperbolic cylinder, respectively. If the curve is a part of a circumference, then the cylindrical surface will be the lateral surface of a horizontal cylindrical segment. A horizontal cylindrical segment is the solid cut from a horizontal cylinder by a single plane oriented parallel to the cylinder's axis of symmetry (the herewith designated longitudinal axis). If the curve is a part of a circumference, then the cylindrical surface will be the lateral surface of a cylinder.

In an embodiment, the pressure means comprise an impregnation material dispenser for dispensing the impregnation material to the sponge.

In an embodiment, the device is arranged to impregnate a filament or a plurality of filaments in parallel, by having the drum is arranged to contact with the sponge at a contact area through which the filament or the plurality of filaments passes, with the filaments not touching each other, at an angle that is substantially perpendicular to the cylindrical surface longitudinal axis.

In an embodiment, the pressure means comprises a perforated plate for pushing the sponge and for dispensing impregnation material to the sponge through said perforated plate.

In an embodiment, the cylindrical surface is the lateral surface of a horizontal cylindrical segment.

In an embodiment, the cylindrical surface is the lateral surface of a cylinder.

In an embodiment, said cylinder lateral surface drum comprises at least two longitudinal grooves for draining excess impregnation material.

In an embodiment, the grooves are each arranged on one side of the drum in respect to said contact area.

In an embodiment, the grooves are each arranged above the symmetry axis of the drum.

In an embodiment, said drum is a hollow piece.

In an embodiment, the sponge compartment comprises a heater for heating the impregnation material to be applied.

In an embodiment, the pressure means is a hydraulic cylinder or a mechanical spring.

In an embodiment, the impregnation material is a resin, adhesive material, among others.

In an embodiment, the sponge is shaped like cube, cylinder, and a parallelepiped, among others.

In an embodiment, the sponge is exchangeable inside the sponge compartment.

It is also disclosed a method for impregnating a filament by using the device of any of the described embodiments, comprising the following steps: feeding the filament over the rotatable drum; tensioning the filament against the drum, simultaneously applying an impregnation material by the sponge such that the lateral of the drum is in contact with the sponge for impregnating the filament.

It is also disclosed an article comprising a fibre impregnated by the described method.

In an embodiment, the article comprises a substrate and wherein the substrate is a composite comprising said fibre.

It is also disclosed a fibre-reinforced composite comprising the fibre impregnated by the described method.

### BRIEF DESCRIPTION OF THE DRAWINGS

The following figures provide preferred embodiments for illustrating the disclosure and should not be seen as limiting the scope of invention.
**Figure 1****:** Schematic representation of an embodiment of a filament winding process.
**Figure 2****:** Schematic representation of the pultrusion process.
**Figure 3****:** Schematic representation of an embodiment of the general view of complete device.
**Figure 4****:** Schematic representation of an embodiment of the perspective view of sponge's cut.
**Figure 5****:** Schematic representation of an embodiment of a shower's detailed view.
**Figure 6****:** Schematic representation of an embodiment of a complete cut view of the device.

### DETAILED DESCRIPTION

The present disclosure relates to an improved process and apparatus for filament winding parts or pultruded workpieces. It involves passing reinforcement material, prior to being wound onto a mandrel or fed into a die, through a high-pressure injection die wherein the reinforcement material is impregnated with resin material. The injection die is capable of increasing the rate of reinforcement application while providing complete impregnation of the reinforcement material.

In an embodiment, **figure 1** shows a schematic representation of an embodiment of a process of winding fibre material and resin around a shape, known as a mandrel, to create a composite product. The filament winding process can use many different fibres and resins to achieve the desired characteristics for the finished component. The final result is an extremely efficient process to create low cost, lightweight, and strong composite materials.

In an embodiment, **figure 2** shows a schematic representation of an embodiment of a process of pultruding fibre material and resin through a shaping die, to create a composite profile. The pultrusion process can use many different fibres and resins to achieve the desired characteristics for the finished component. The final result is an extremely efficient process to create low cost, lightweight, and strong composite profiles.

In an embodiment, the fibres are impregnated with a liquid resin, such as unsaturated polyester or an epoxy resin, via an impregnation bath or a roll applicator. The fibres are wetted before they are wound onto the mandrel or pass through a die. To obtain wetting, the fibres are typically drawn through an impregnation bath or passed over an applicator roll.

In an embodiment, resin baths are open or partially open to the atmosphere resulting in significant emissions into the atmosphere of environmentally unfriendly volatile organic compounds or VOC's. Further, significant resin waste commonly occurs with the use of open bath wet-out methods. Voids are commonly found in filament wound parts or pultruded profiles that are caused by air becoming entrapped in the resin loaded onto the fibres as they pass through a resin bath or engage a roll applicator.

In an embodiment, continuous lamination process to produce linear profiles of constant transversal sections, in which the roving is impregnated with the resin, being the result composite tensioned by a system. Then, using a metal heaten mould or die the final form is achieved.

In an embodiment, the pultrusion of thermosets, the reinforcing fibres may be impregnated by passing them through a resin bath. The resin-impregnated fibre strand is then brought to the near net shape at a number of preform stations and shaped and cured in a heated mould.

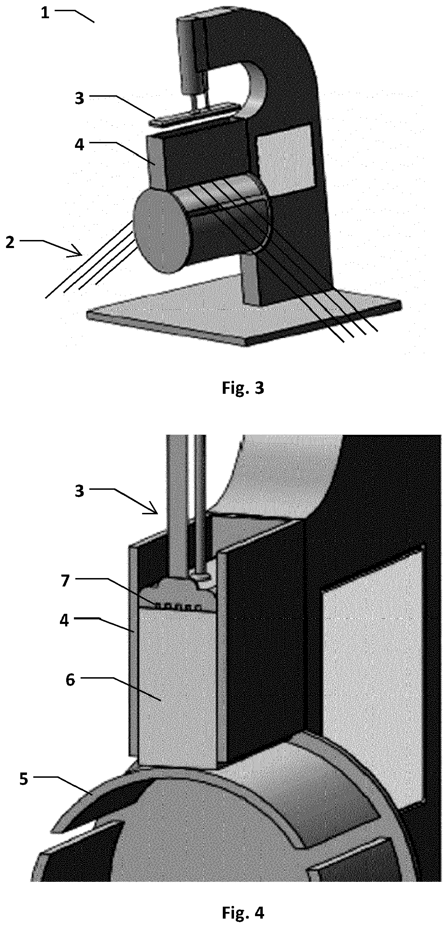

In an embodiment, **figure 3** shows a schematic representation of an embodiment of the device where the top of the sponge's compartment is mobile and has a resin's injection system included. That system consists in a shower (board with holes) from where the resin fall in a regulated way. Over that, we have a parallelepiped sponge inserted into a vertical support mechanism. The resin impregnates the sponge that, consequently, impregnates the fibres that are passing above the drum. The sponge descends as it wears out. The resin is not expected to run-off because of being applied with a sponge. It should be noted that we have consulted different types of sponges books that make possible the flow of epoxy resin with a viscosity of 800 mPa.s.

In an embodiment, **figure 4** shows a schematic representation of an embodiment of the device where the sponge's compartment has a resistance within the walls. Hence, it is possible to keep the resin at the temperature whose the correspondent viscosity is the most appropriate. A cylinder to which is linked the resin's injection tube would control the system that is responsible for the sponge's pressure regulation. All the system would be completely mobile to the exception of the compartment (which is the guide) which has the parallelepipedic sponge. When the sponge is already too "used", it would be easy to remove since there would be any kind of fixation to the resin's shower. It would just be in the top of the fibres and the shower would inject the resin and make pressure at the same time.

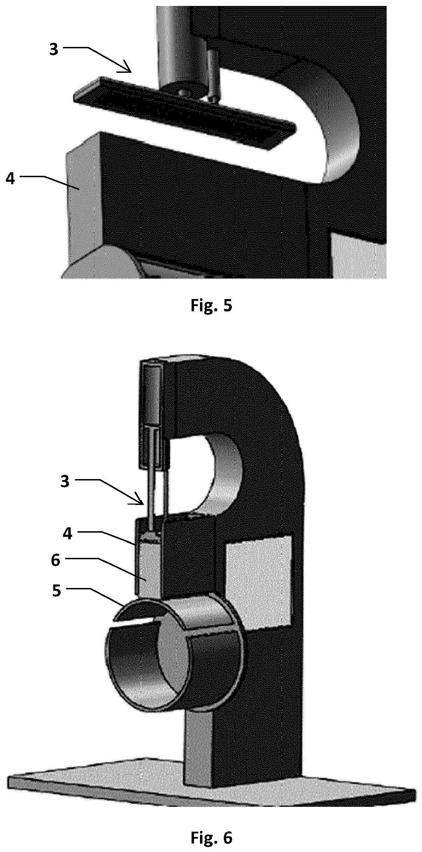

In an embodiment, **figure 5** shows a schematic representation of an embodiment of the device where the drum is hollow and has two grooves on the face, one on each side and above the symmetry axis. This way it is possible to collect for the drum the resin that possibly drain for his faces. The drum is also attached to the resin's tank, located on the machine's column. The resin still passes through a filter before returning to the tank, increasing the reuse of it.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof.

The above described embodiments are combinable.

The following claims further set out particular embodiments of the disclosure.

## Claims

1. Device for impregnating a filament, comprising:
a sponge arranged to dispense an impregnation material onto the filament;
a sponge compartment for guiding the sponge towards the filament;
a pressure means arranged to push the sponge, inside the sponge compartment, towards the filament;
a cylindrical surface drum for supporting and tensioning the filament to receive the impregnation material;
wherein the drum is arranged to contact with the sponge at a contact area through which the filament passes at an angle that is substantially perpendicular to the cylindrical surface longitudinal axis.

2. Device according to the previous claim wherein the pressure means comprise an impregnation material dispenser for dispensing the impregnation material to the sponge.

3. Device according to any of the previous claims wherein the device is arranged to impregnate a plurality of filaments in parallel, by having the drum is arranged to contact with the sponge at a contact area through which, and throughout which, the plurality of filaments passes, with the filaments not touching each other, at an angle that is substantially perpendicular to the cylindrical surface longitudinal axis.

4. Device according to any of the previous claims wherein the pressure means comprise a perforated plate for pushing the sponge and for dispensing impregnation material to the sponge through said perforated plate wherein the pressure means is a hydraulic cylinder or a mechanical spring.

5. Device according to any of the previous claims wherein the cylindrical surface is the lateral surface of a horizontal cylindrical segment.

6. Device according to the previous claim wherein said cylinder lateral surface drum comprises at least two longitudinal grooves for draining excess impregnation material.

7. Device according to the previous claim wherein the grooves are each arranged on one side of the drum in respect to said contact area, in particular said grooves are each arranged above the symmetry axis of the drum.

8. Device according to any of the previous claims wherein said drum is a hollow piece.

9. Device according to any of the previous claims wherein the sponge compartment comprises a heater for heating the impregnation material to be applied and the sponge is exchangeable inside the sponge compartment.

10. Device according to any of the previous claims wherein the sponge is shaped like cube, cylinder or a parallelepiped.

11. Device according to any of the previous claims wherein the filament is a fibre bundle.

12. Method for impregnating a filament by using the device of any of the previous claims, comprising the following steps:
feeding the filament over the rotatable drum;
tensioning the filament against the drum,
simultaneously applying an impregnation material by the sponge such that the lateral of the drum is in contact with the sponge for impregnating the filament.

13. An article comprising a filament impregnated by the method of the claim 12.

14. An article according to the previous claim comprising a substrate and wherein the substrate is a composite comprising said filament.

15. A fibre-reinforced composite comprising the filament impregnated by the method of the claim 12.
